# EUROPEAN PATENT APPLICATION

(11) **EP 4 826 112 A1**
(43) Date of publication of application: **21.10.2026**
(21) Application number: 24904097.3
(22) Date of filing: 28.11.2024
(51) Int. Cl.: C23C 2/12, C25D 3/12, C25D 5/50, C23C 2/02, C23C 2/20, C23C 28/02, C22C 38/58, C22C 38/50, C22C 38/52

(54) **HOT PRESS-FORMING PLATED STEEL SHEET, HOT PRESS-FORMED MEMBER, AND MANUFACTURING METHODS THEREFOR**

(30) Priority: 15.12.2023 KR 20230183850
(71) Applicant: POSCO Co., Ltd, Gyeongsangbuk-do 37859 (KR)
(72) Inventor: KIM, Sang-Heon, Gwangyang-si, Jeollanam-do 57807 (KR); KIM, Seong-Woo, Gwangyang-si, Jeollanam-do 57807 (KR); LEE, Sea-Woong, Gwangyang-si, Jeollanam-do 57807 (KR); OH, Jin-Keun, Gwangyang-si, Jeollanam-do 57807 (KR); PARK, Man-Young, Gwangyang-si, Jeollanam-do 57807 (KR); OH, Kkoch-Nim, Gwangyang-si, Jeollanam-do 57807 (KR)
(74) Representative: Meissner Bolte Partnerschaft mbB
(86) International application number: PCT/KR2024/019112
(87) International publication number: WO 2025/127532

(57) **Abstract**

One aspect of the present invention provides a hot press-forming plated steel sheet having excellent resistance to hydrogen embrittlement, a hot press-formed member, and manufacturing methods therefor.

## Description

### Technical Field

The present disclosure relates to a plated steel sheet for hot forming having excellent resistance to hydrogen embrittlement, a hot formed member, and a method for manufacturing the same.

### Background Art

In recent years, due to depletion of oil energy sources and high interest in the environment, regulations on improving fuel efficiency of automobiles are becoming increasingly stricter day by day. In terms of materials, as a method for improving the fuel efficiency of automobiles, a thickness of a steel sheet used may be decreased, but when the thickness is decreased, there may be a problem with car safety, and thus, improvement of steel sheet strength should be supported.

For this reason, a demand for a high-strength steel sheet has been continuously increasing, and various types of steel sheets have been developed. However, since these steel sheets have high strength in themselves, their workability may be poor. That is, since a product of strength and elongation of the steel sheet tends to always have a constant value for each grade, when the steel sheet strength is increased, an elongation which is an indicator of workability is decreased.

In order to solve the problem, a hot press forming method has been suggested. The hot press forming method is a method in which a steel sheet is worked at a high temperature suitable for steel sheet working and then quenched at a low temperature, thereby forming a low-temperature structure such as martensite in the steel sheet to increase the strength of a final product. In this case, a workability problem may be significantly decreased when a member having high strength is manufactured.

When the steel sheet undergoes hot press forming, it may have a strength of 1000 MPa or more, or in some cases, 1400 MPa or more, and recently, as the required level of strength has further increased, the steel sheet may even have a strength of 1800 MPa or more. However, as the steel sheet has a higher strength, it becomes sensitive to hydrogen delayed fracture, and even when it contains a small amount of hydrogen, it sometimes reaches rupture. In addition, when an aluminum plated steel sheet is hot press formed, Fe is diffused from the base iron of the steel sheet to the plating layer on the surface to cause alloying on the plating layer, and hydrogen penetrated during hot press forming does not easily escape by the alloyed layer, so that the hydrogen resistance characteristics of a hot press formed member are deteriorated.

### Summary of Invention

### Technical Problem

An aspect of the present disclosure is to provide a plated steel sheet for hot forming having excellent resistance to hydrogen embrittlement, a hot formed member, and a method for manufacturing the same.

An object of the present disclosure is not limited to the above description. Any person with ordinary skill in the art to which the present disclosure pertains will have no difficulty in understanding further objects of the present disclosure from the general description the present specification.

### Solution to Problem

According to an aspect of the present disclosure, a plated steel sheet for hot forming includes: a base steel sheet; and an Al-based plating layer formed on a surface of the base steel sheet, wherein the Al-based plating layer includes a Fe₂Al₈Si phase, and the Fe₂Al₈Si phase includes, by weight: 15.0 to 25.0% of Fe, 5.00 to 15.0% of Si, and 0.400% to 5.00% of Nimax, with a remainder of Al and unavoidable impurities.

The above-described Al-based plating layer may include, by weight, 5.0 to 10% of Si with the remainder of Al and other unavoidable impurities, when a remaining alloy composition excluding Fe diffused from the base steel sheet is 100%.

The above-described Fe₂Al₈Si phase may have an average thickness of 3.0 µm or more in a thickness direction of the Al-based plating layer.

The above-described base steel sheet may include, by weight: 0.060 to 0.50% of C, 0.050 to 1.0% of Si, 0.50 to 4.0% of Mn, 0.00100 to 0.0300% of P, 0.000100 to 0.0200% of S, 0.0100 to 0.100% of Al, 0.0100 to 1.00% of Cr, 0.001000 to 0.02000% of N, 0 to 0.100% of Ti, 0 to 0.01000% of B, 0 to 1.00% of Cu, 0 to 1.00% of Mo, 0 to 1.00% of Cr, 0 to 1.00% of Ni, 0 to 1.00% of V, 0 to 0.0100% of Ca, 0 to 0.100% of Nb, 0 to 1.00% of Sn, 0 to 1.00% of W, 0 to 1.00% of Sb, 0 to 0.100% of Mg, 0 to 1.00% of Co, 0 to 1.00% of As, 0 to 1.00% of Zr, 0 to 1.00% of Bi, and 0 to 0.300% of REM, with a remainder of Fe and unavoidable impurities.

The plated steel sheet for hot forming according to an example embodiment of the present disclosure may further include a Ni flash electroplating layer between the base steel sheet and the Al-based plating layer.

According to another aspect of the present disclosure, a method for manufacturing a plated steel sheet for hot forming includes: preparing a base steel sheet; performing Ni flash electroplating on the base steel sheet to obtain an electroplated steel sheet; continuously annealing the electroplated steel sheet; dipping the continuously annealed electroplated steel sheet into an aluminum plating bath; adjusting a plating deposited amount of the electroplated steel sheet dipped into the aluminum plating bath with an air knife (A/K); and cooling the electroplated steel sheet to obtain a plated steel sheet.

The above-described Ni flash electroplating may be performed in the plating deposited amount of 150 mg/m² or more and 2500 mg/m² or less.

In addition, the method for manufacturing a plated steel sheet for hot forming according to an example embodiment of the present disclosure may have a K value derived from the following Equation 1 of 2 or more and 4 or less:
$K = {10}^{4} \times \left(a\times d\right) / \left(b\times c\times e\right)$ (Equation 1)
wherein a is a Si content (wt%) in the aluminum plating bath, b is a line speed (mpm), c is air knife spacing (mm), d is air knife pressure (kPa), and e is an air knife height (mm).

The above-described base steel sheet may include, by weight: 0.060 to 0.50% of C, 0.050 to 1.0% of Si, 0.50 to 4.0% of Mn, 0.00100 to 0.0150% of P, 0.000100 to 0.0200% of S, 0.0100 to 0.100% of Al, 0.0100 to 1.00% of Cr, 0.001000 to 0.02000% of N, 0 to 0.100% of Ti, 0 to 0.01000% of B, 0 to 1.00% of Cu, 0 to 1.00% of Mo, 0 to 1.00% of Cr, 0 to 1.00% of Ni, 0 to 1.00% of V, 0 to 0.01% of Ca, 0 to 0.10% of Nb, 0 to 1.00% of Sn, 0 to 1.00% of W, 0 to 1.00% of Sb, 0 to 0.100% of Mg, 0 to 1.00% of Co, 0 to 1.00% of As, 0 to 1.00% of Zr, 0 to 1.00% of Bi, and 0 to 0.300% of REM, with the remainder of Fe and unavoidable impurities.

The above-described aluminum plating bath may include 5.0 to 10 wt% of Si, with the remainder of Al and other unavoidable impurities.

According to still another aspect of the present disclosure, a hot formed member includes base iron; and an alloy plating layer formed on the base iron, wherein the alloy plating layer includes a Fe₂AlSi₂ phase.

The above-described Fe₂AlSi₂ phase may include, by weight: 25.0 to 60.0% of Fe, 10.0 to 20.0% of Si, and 0.300% to 5.00% of Nimax, with the remainder of Al and unavoidable impurities.

The alloy plating layer may include, by weight: 1.0 to 15% of Si and 0.00100 to 1.00% of Ni, with the remainder of Al and other unavoidable impurities, when a remaining alloy composition excluding the content of Fe diffused from the base steel sheet is 100%.

The above-described Fe₂AlSi₂ phase may be 5% by area or more with respect to the total area of the alloy plating layer and may be formed as a distinct layer in the middle of the alloy plating layer.

A maximum thickness average value of the above-described Fe₂AlSi₂ phase may be 2.0 µm or more in a thickness direction of the alloy plating layer.

In addition, the above-described Fe₂AlSi₂ phase may have a maximum value of spacing with an adjacent Fe₂AlSi₂ phase of 4.5 µm or less, when viewed from a cross section of the alloy plating layer.

The hot formed member according to an example embodiment of the present disclosure may have a hydrogen diffusion coefficient D_{eff,coating} value derived from the following Equations 2 and 3 of the alloy plating layer of 2.5×10⁻⁷ cm²s⁻¹ or less and a diffusible hydrogen amount of 0.2 ppm or less:
${D}_{eff} = 0.76 ⋅ \frac{{L}^{2}}{{π}^{2} {t}_{b}}$ (Equation 2)
wherein D_{eff} is a hydrogen diffusion coefficient of the hot formed member, L is a thickness of the hot formed member, and t_{b} is a start time (sec) when hydrogen begins to permeate during a hydrogen permeability test in the hot formed member,
$\frac{L}{{D}_{eff}} = \frac{{L}_{sheet}}{{D}_{eff , sheet}} + \frac{{L}_{coating}}{{D}_{eff , coating}}$ (Equation 3)
wherein D_{eff} is a hydrogen diffusion coefficient of the hot formed member, L is a thickness of the hot formed member, Lₛₕₑₑₜ is a thickness of the base iron, L_{Coating} is a thickness of the alloy plating layer, and D_{eff,sheet} is a hydrogen diffusion coefficient of the base iron.

### Advantageous Effects of Invention

The plated steel sheet for hot forming of the present disclosure may form a Fe₂AlSi₂ phase at an appropriate level in an alloy plating layer of a hot formed member obtained after hot press forming, by forming Ni on a steel sheet surface and sufficiently diffusing the Ni into an Al-based plating layer. Since a Fe₂AlSi₂ phase formed as such may decrease a diffusible hydrogen amount in the alloy plating layer, the hot formed member of the present disclosure including the phase may have excellent resistance to hydrogen embrittlement.

### Brief Description of Drawings

FIG. 1 is an SEM photographic image of a plating layer formed on a plated steel sheet for hot forming corresponding to Inventive Example 6.
FIG. 2 is an SEM photographic image of a plating layer formed on a hot formed member corresponding to Inventive Example 6.

### Best Mode for Invention

Hereinafter, the preferred example embodiments in the present disclosure will now be described in detail. However, the example embodiments of the present disclosure may be modified in many different forms, and the scope of the present disclosure is not limited to the example embodiments set forth herein.

In the present specification, the term "comprising" is used to indicate further inclusion of other constituent elements rather than exclusion of other constituent elements, unless otherwise particularly stated.

In addition, unless otherwise defined in the specification of the present disclosure, % unit refers to wt%.

Though not essential, it should be noted that the technical solution according to each aspect of the present disclosure may be useful in the technical solution of other aspects. In addition, the composition and the various useful parameters according to each aspect of the present disclosure may be appropriately combined with other aspects to obtain favorable effects.

The present inventors conducted in-depth study of alloy phases of various layers formed on a hot formed member obtained by press forming an aluminum plated steel sheet. As a result, the present inventors found that when a Fe₂AlSi₂ phase among alloy phases of various layers is formed on a hot formed member, the Fe₂AlSi₂ phase may effectively prevent hydrogen absorbed in a steel sheet, and thus, the hot formed member including it may secure excellent resistance to hydrogen embrittlement.

As a result of studying it in greater depth, the present inventors found that as a method for forming a Fe₂AlSi₂ phase at an appropriate level on a hot formed member as described above, it is effective to include Ni on a steel sheet surface and sufficiently diffuse the Ni into an Al-based plating layer formed thereon. In addition, the inventors of the present disclosure found that in order to diffuse Ni into the plating layer, the Al-based plating layer needs to include a Fe₂Al₈Si phase, thereby completing the present disclosure.

Hereinafter, a plated steel sheet for hot forming according to an aspect of the present disclosure will be described in detail.

### [Plated steel sheet for hot forming]

The plated steel sheet for hot forming according to an example embodiment of the present disclosure may include a base steel sheet; and an Al-based plating layer formed on a surface of the base steel sheet. In addition, the Al-based plating layer may include a Fe₂Al₈Si phase, and the Fe₂Al₈Si phase may include, by weight: 15.0 to 25.0% of Fe, 5.00 to 15.0% of Si, and 0.400% to 5.00% of Nimax, with the remainder of Al and unavoidable impurities.

Hereinafter, each component will be described in detail.

According to an example embodiment of the present disclosure, the base steel sheet (base iron), which is a steel sheet for hot press forming, may not be particularly limited as long as it is used in hot press forming. However, as a non-limiting example, the base steel sheet may include, by weight: 0.060 to 0.50% of C, 0.050 to 1.0% of Si, 0.50 to 4.0% of Mn, 0.00100 to 0.0150% of P, 0.000100 to 0.0200% of S, 0.0100 to 0.100% of Al, 0.0100 to 1.00% of Cr, 0.001000 to 0.02000% of N, 0 to 1.00% of Ti, 0 to 0.01000% of B, 0 to 1.00% of Cu, 0 to 1.00% of Mo, 0 to 1.00% of Cr, 0 to 1.00% of Ni, 0 to 1.00% of V, 0 to 0.01% of Ca, 0 to 0.10% of Nb, 0 to 1.00% of Sn, 0 to 1.00% of W, 0 to 1.00% of Sb, 0 to 0.100% of Mg, 0 to 1.00% of Co, 0 to 1.00% of As, 0 to 1.00% of Zr, 0 to 1.00% of Bi, and 0 to 0.300% of REM.

### C: 0.060 to 0.50%

C may be added in an appropriate amount as an essential element for improving strength of the hot formed member. That is, in order to sufficiently secure the strength of the hot formed member, C may be added at 0.060% or more. According to another example embodiment, a lower limit of the C content may be 0.075%. However, when its content is too high, in the case of producing a cold-rolled material, hot-rolled material strength in cold rolling of a hot-rolled material is too high, so that cold rollability is significantly deteriorated, and spot weldability is greatly reduced. Thus, in order to secure sufficient cold rollability and spot weldability, C may be added at 0.50% or less. In addition, as another example embodiment, the C content may be 0.45% or less, and as another example embodiment, it may be 0.40% or less.

### Si: 0.050 to 1.0%

The Si should be added as a deoxidizer in steelmaking, and also serves to suppress production of a carbide which has the greatest effect on the strength of a hot formed member. In the present disclosure, it may be added at a content of 0.050% or more, in order to secure residual austenite by concentrating carbon into a martensite lath grain boundary after producing martensite in hot press forming. In addition, in order to secure sufficient platability when aluminum is plated on a steel sheet after rolling, the upper limit of the Si content may be set to 1.0%. According to another example embodiment, the upper limit of the Si content may be 0.80%.

### Mn: 0.50 to 4.0%

Manganese (Mn) may be added at a content of 0.50% or more, in order to not only secure a solid solution strengthening effect but also lower a critical cooling rate for securing martensite in a hot press formed member. In addition, in securing hot press forming process workability, reducing manufacturing costs, and improving spot weldability, by appropriately maintaining steel sheet strength, the Mn content may be limited to 4.0% or less. In addition, as another example embodiment, the Mn content may be 3.5% or less.

### P: 0.00100 to 0.0300%

The P is present as an impurity in a steel, and it is favorable when its content is as low as possible. Therefore, in the present disclosure, the P content may be limited to 0.0150% or less, and according to another example embodiment, the P may be limited to 0.0200% or less. Since P is an impurity element which is more favorable when it is less contained, the lower limit does not needs to be particularly determined. However, since manufacturing costs may be increased for excessively lowering the P content, the lower limit may be 0.00100% when considering this.

### S: 0.000100 to 0.0200%

Since the S is an impurity in a steel and is an element which impairs the ductility, impact properties, and weldability of a member, its maximum content may be limited to 0.0200%, and more preferably 0.0100% or less. In addition, since the manufacturing costs may be increased at its minimum content of less than 0.000100%, the lower limit of the content may be 0.000100%.

### Al: 0.0100 to 0.100%

The Al may perform a deoxidation function in steelmaking along with Si to increase cleanliness of steel, and in order to obtain the effect, it may be added at a content of 0.0100% or more. In addition, in order to perform heating required in hot press forming in an appropriate temperature range by preventing an excessive rise in an Ac3 temperature, the Al content may be limited to 0.100% or less.

### Cr: 0.0100 to 1.00%

Since the Cr may secure improvement of hardenability and strength and crystal grain refinement through a precipitation strengthening effect, it may be added at 0.0100% or more. In addition, in order to secure member weldability, its content may be limited to 1.00% or less.

### N: 0.001000 to 0.02000%

Nitrogen (N) is an element which is unavoidably added to a steel, and when the content of N is more than 0.02000%, N is bonded to Al in the steel to form AlN, which facilitates slab crack occurrence. Since N is an unavoidable impurity, the lower limit of the content is not particularly defined. However, since high manufacturing costs may be required for controlling the content of N to less than 0.001000%, the content may be 0.001000% or more considering this.

### Ti: 0 to 0.100%

Ti may be added, since it is effective for improving a steel sheet of a heat treatment member by forming microprecipitates, and residual austenite stabilization and impact toughness improvement by crystal grain refinement. However, when its amount added is more than 0.100%, the effect may be saturated, and also a manufacturing cost rise may be caused due to the addition of excessive alloy iron. In addition, the Ti is an element which may be added or not added selectively depending on the purpose, and the base steel sheet of the present disclosure may not include the Ti at all.

### B: 0 to 0.01000%

The B is an element which may improve hardenability only with a small amount of addition and also be segregated in an old austenite crystal grain boundary to suppress brittleness of a hot press formed member by P and/or S grain boundary segregation. However, when its content is more than 0.01000%, the effect is saturated, brittleness is caused during hot rolling, and thus, the upper limit may be 0.01000%, and in another example embodiment, the B content may be 0.008000% or less. In addition, the B is an element which may be added or not added selectively depending on the purpose, and the base steel sheet of the present disclosure may not include the B at all.

In addition to this, considering the target physical properties of the final product, it is evident to a person with ordinary skill in the art that Cu, Mo, Cr, Ni, V, Ca, Nb, Sn, W, Sb, Mg, Co, As, Zr, Bi, REM, and the like may be further included in addition to the composition described above.

The residuals other than the components described above may include iron (Fe) and unavoidable impurities.

Meanwhile, as described above, the plated steel sheet for hot forming according to an example embodiment of the present disclosure may secure resistance to hydrogen embrittlement of the hot formed member excellently by including Ni on the surface of the steel sheet and sufficiently diffusing the Ni into an Al-based plating layer formed thereon. As a method for achieving the purpose, the plated steel sheet for hot forming according to an example embodiment of the present disclosure may further include a Ni flash electroplating layer between the base steel sheet and the Al-based plating layer, but considering that there are various methods for including Ni on the surface of the steel sheet, the present disclosure is not necessarily limited thereto.

Meanwhile, the Al-based plating layer of the plated steel sheet for hot forming according to an example of the present disclosure may include a Fe₂Al₈Si phase, and the Fe₂Al₈Si phase may include, by weight: 15.0 to 25.0% of Fe, 5.00 to 15.0% of Si, and 0.400% to 5.00% of Nimax, with the remainder of Al and unavoidable impurities. Herein, the Nimax may refer to the maximum value of Ni throughout the present specification.

The Fe₂Al₈Si phase may be formed depending on a reaction of the base steel sheet and the Al-based plating layer immediately after aluminum plating. The Fe₂Al₈Si phase allows the electroplated Ni to be effectively diffused into the plating layer, as described above. The reason why the Fe₂Al₈Si phase helps with Ni diffusion is that the Ni diffusion rate in the Fe₂Al₈Si phase is higher than in other phases, and a Ni solid solubility in the alloying process is high. When Ni is sufficiently diffused in the plating layer as such, the Fe₂AlSi₂ phase may be produced at an appropriate level after a HPF heat treatment, and thus, the resistance to hydrogen embrittlement of the hot formed member obtained after hot press forming the plated steel sheet may be effectively improved.

In order to achieve the purpose described above, according to an example embodiment of the present disclosure, the Fe₂Al₈Si phase may have an average thickness of 3.0 µm or more in the thickness direction of the Al-based plating layer. In addition, according to an embodiment of the present disclosure, the Fe₂Al₈Si phase may be formed in the interface between the base steel sheet and the Al-based plating layer and present in the form of a layer. According to another example embodiment, the Fe₂Al₈Si phase of the plated steel sheet may have an average thickness of 3.2 µm or more, and according to another example embodiment, may have an average thickness of 3.6 µm or more. Since the thicker the average thickness of the Fe₂Al₈Si phase is, the more favorable it is, the upper limit is not separately limited, but when the thickness is excessively large, a high temperature needs to be maintained during plating layer dipping or cooling, and in this case, considering that an equipment load may occur in this case, the upper limit of the average thickness of the Fe₂Al₈Si phase may be 9.0 µm, in an example of the present disclosure.

Meanwhile, according to an example embodiment of the present disclosure, the Al-based plating layer may include, by weight: 5.0 to 10% of Si, with the remainder of Al and other unavoidable impurities, when a remaining alloy composition excluding Fe diffused from the base steel sheet is 100%. In addition, as described above, since the plated steel sheet for hot forming according to a non-limiting example of the present disclosure may further include a Ni flash electroplating layer between the base steel sheet and the Al-based plating layer, in this case, the Al-based plating layer may include Ni diffused from the Ni flash electroplating layer. Considering this, in the alloy composition of the Al-based plating layer described above, the remaining alloy composition excluding Ni diffused from the Ni flash electroplating layer may be 100%, together with Fe diffused from the base steel sheet.

More specifically, in an example embodiment of the present disclosure, Si may be included at 5.0 to 10 wt%. Si serves to make alloying with Fe uniform in the plating layer, and in order to obtain the effect, it may be included at least 5.0 wt% or more. However, since Si serves to suppress diffusion of Fe, when it is contained at more than 10%, Fe diffusion is excessively suppressed, and the plating structure desired in the present disclosure may not be obtained. According to another example embodiment, the Si content may be 7.0% to 9.8%, and according to another example embodiment, it may be 8.0% to 9.5 wt%.

Since the Al-based plating layer of the plated steel sheet for hot forming according to an example embodiment of the present disclosure satisfies the alloy component range described above, the Fe₂Al₈Si phase included in the Al-based plating layer may include, by weight: 15.0 to 25.0% of Fe, 5.00 to 15.0% of Si, and 0.400% to 5.00% of Nimax, with the remainder of Al and unavoidable impurities.

In particular, the Fe₂Al₈Si phase may sufficiently diffuse Ni into the Al-based plating layer, by including 0.400% or more of Nimax. As another example embodiment, the Nimax may be 0.500% or more. Since the more the content of Nimax is, the more favorable for achieving the purpose of the present disclosure it is, the upper limit is not separately limited, but considering that practically the Nimax may not increase beyond a certain level, the upper limit of the Nimax in the present disclosure may be 5.00%.

The Fe content in the Fe₂Al₈Si phase may be overall or partially derived from the base steel sheet, and being derived from the base steel sheet may mean being diffused from a Fe component and included in the Fe₂Al₈Si phase.

Hereinafter, the method for manufacturing a plated steel sheet for hot forming of the present disclosure will be described. However, the following method for manufacturing a plated steel sheet for hot forming may be only an example, and it should be noted that the plated steel sheet for hot forming of the present disclosure is not necessarily manufactured by the present manufacturing method, and there is no problem in using any manufacturing method for implementing each example embodiment of the present disclosure as long as it is a method meeting the claims of the present disclosure.

### [Method for manufacturing plated steel sheet for hot forming]

The method for manufacturing a plated steel sheet for hot forming according to an example embodiment of the present disclosure may include: preparing a base steel sheet; performing Ni flash electroplating on the base steel sheet to obtain an electroplated steel sheet; continuously annealing the electroplated steel sheet; dipping the continuously annealed electroplated steel sheet into an aluminum plating bath; adjusting a plating deposited amount of the electroplated steel sheet dipped into the aluminum plating bath with an air knife (A/K); and cooling the electroplated steel sheet to obtain a plated steel sheet.

### Preparing base steel sheet

A base steel sheet is prepared as a steel sheet for plating. The base steel sheet may be a cold rolled steel sheet, and in some cases, may be a hot rolled steel sheet. Since the composition of the base steel sheet is as described above, the description will be omitted.

### Performing Ni flash electroplating to obtain electroplated steel sheet

As described above, in the method for manufacturing a plated steel sheet for hot forming according an example embodiment of the present disclosure, alloyed Ni may be formed on the base steel sheet used in the hot press forming in order to form a Fe₂AlSi₂ phase at an appropriate level in a hot formed member.

As a non-limiting method for implementing this, the method for manufacturing a plated steel sheet for hot forming according to an example embodiment of the present disclosure may include performing Ni flash electroplating on the base steel sheet to obtain an electroplated steel sheet.

Herein, the Ni flash electroplating may be performed in the plating deposited amount of 150 mg/m² or more and 2500 mg/m² or less. That is, in the method for manufacturing a plated steel sheet for hot forming according to an example embodiment of the present disclosure, Ni flash electroplating is performed in the plating deposited amount of 150 mg/m² to form a Fe₂AlSi₂ phase at an appropriate level on an alloy plating layer of the hot formed member, thereby improving resistance to hydrogen embrittlement of the hot formed member. According to another example embodiment, the Ni flash electroplating may be performed in the plating deposited amount of 200 mg/m² or more, and according to another example embodiment, may be performed in the plating deposited amount of 250 mg/m² or more.

However, when the Ni flash electroplating is performed in the plating deposited amount of more than 2500 mg/m² or more, a production speed may be reduced, or excessive current is used for electroplating, and thus, a problem of significantly increasing an electroplating deviation may arise. Therefore, in an example embodiment of the present disclosure, the upper limit of the plating deposited amount of the Ni flash electroplating may be 2500 mg/m². According to another example embodiment, the Ni flash electroplating may be performed in the plating deposited amount of 2000 mg/m² or less.

### Continuous annealing

Next, according to a non-limiting example of the present disclosure, the electroplated steel sheet may be continuously annealed.

More specifically, according to an example of the present disclosure, the continuous annealing may be performed at 700°C to 900°C. When the continuous annealing temperature is lower than 700°C, it is difficult to recover and recrystallize a rolled structure produced in the cold rolling process, but when the temperature is higher than 900°C, annealing equipment may be deteriorated, manufacturing costs may be increased due to frequent replacement of the equipment and the like.

In addition, the continuous annealing may be performed for 1 to 1000 seconds in the temperature range described above. When the annealing time is less than 1 second, the effect of the annealing may not be obtained, but when the time is more than 1000 seconds, productivity may be reduced.

### Dipping into aluminum plating bath

According to an example embodiment of the present disclosure, the electroplated steel sheet after the continuous annealing may be dipped into an aluminum plating bath. Herein, the aluminum plating bath may include 5.0 to 10 wt% of Si, with the remainder of Al and other unavoidable impurities.

### Adjusting plating deposited amount with air knife (A/K)

In an example embodiment of the present disclosure, the plating deposited amount of the electroplated steel sheet dipped into the aluminum plating bath may be adjusted with an air knife (A/K). In an example embodiment of the present disclosure, the surface of the Al-based plating layer may be sufficiently cooled to prevent problems such as seizure on rolls of cooling equipment, and simultaneously, the temperature inside the Al-based plating layer may be appropriately maintained by the corresponding step. In addition, in an example embodiment of the present disclosure, the temperature inside the Al-based plating layer is appropriately maintained as such, thereby forming a Fe₂Al₈Si phase at a certain level or more, thereby alloying Ni in the Al-based plating layer.

In order to achieve the purpose described above, according to an example embodiment of the present disclosure, the K value derived by the following Equation 1 may be 2 or more and 4 or less:
$K = {10}^{4} \times \left(a\times d\right) / \left(b\times c\times e\right)$ (Equation 1)
wherein a is a Si content (wt%) in the aluminum plating bath, b is a line speed (mpm), c is air knife spacing (mm), d is air knife pressure (kPa), and e is an air knife height (mm).

When the K value is less than 2, the surface of the Al-based plating layer may not be sufficiently cooled, so that seizure on rolls may be deteriorated, and a cooling equipment problem therefrom may arise. However, when the K value is more than 4, an amount of air injected is excessively increased to excessively increase a process cost, and cooling inside the plating layer excessively occurs, so that alloying of Ni in the plating layer may not be easy. As another example embodiment, the K value may be 2.04 to 3.96, and as another example embodiment, the K value may be 2.11 to 3.79.

### Cooling electroplated steel sheet to obtain plated steel sheet

Next, the electroplated steel sheet may be cooled to manufacture a plated steel sheet. Since the detailed conditions during cooling such as cooling rate and cooling stop temperature may be appropriately designed by a person skilled to suit the purpose, they are not separately defined.

Meanwhile, according to another example embodiment of the present disclosure, a hot formed member obtained by hot press forming the plated steel sheet for hot forming of the present disclosure described above may be provided. Herein, the hot press forming may use a method commonly used in the art, and for example, the plated steel sheet for hot forming according to the present disclosure may be heated in a temperature range of 880 to 950°C for 3 to 10 minutes, and then the heated steel sheet may be hot formed using a press to a desired shape and then quenched, but is not limited thereto.

Hereinafter, a hot formed member obtained by hot press forming the plated steel sheet for hot forming of the present disclosure according to the method described above will be described in detail.

### [Hot formed member]

As described above, when the plated steel sheet for hot forming of the present disclosure is hot press formed, a hot formed member may be obtained. When HPF heat treatment proceeds as such, alloying of a plating layer including Ni occurs, and thus, a Fe₂AlSi₂ phase may be formed with an intermediate layer (FeAl(Si)).

That is, the hot formed member according to an example embodiment of the present disclosure may include base iron; and an alloy plating layer formed on the base iron, wherein the alloy plating layer may include a Fe₂AlSi₂ phase.

As a non-limiting example, the Fe₂AlSi₂ phase included in the alloy plating layer may be formed as a distinct layer in the middle of the alloy plating layer.

As such, the formed Fe₂AlSi₂ phase serves to effectively prevent absorbed hydrogen, and lower the hydrogen diffusion rate (D_{eff,coating}) in the plating layer, thereby decreasing a diffusible hydrogen amount after the HPF heat treatment.

In order to obtain the effect described above, according to an example embodiment of the present disclosure, the Fe₂AlSi₂ phase may be 5% by area with respect to the total area of the alloy plating layer. When the Fe₂AlSi₂ phase is less than 5% by area, the hydrogen diffusion rate in the plating layer is not effectively lowered, so that the hot formed member including it may be susceptible to hydrogen embrittlement. According to another example embodiment, the Fe₂AlSi₂ phase may be 5.1% by area with respect to the total area of the alloy plating layer, and according to another example embodiment, it may be 5.9% by area. Though the upper limit of the area fraction of the Fe₂AlSi₂ phase is not separately defined, as an example, the area fraction of the Fe₂AlSi₂ phase may be 15% by area or less.

Identically, for the purpose of providing a hot formed member having excellent resistance to hydrogen embrittlement by forming the Fe₂AlSi₂ phase at an appropriate level, the maximum thickness average value of the Fe₂AlSi₂ phase in the thickness direction of the alloy plating layer may be 2.0 µm or more. As another example, the average value of the maximum thickness may be 2.5 µm or more, and as another example, it may be 2.7 µm or more. The average value of the maximum thickness may be calculated by repeating a process of observing the Fe₂AlSi₂ phase through SEM image analysis and then measuring the maximum thickness of the observed Fe₂AlSi₂ phase, and then averaging the values. In the present disclosure, though the upper limit of the maximum thickness average value of the Fe₂AlSi₂ phase is not separately defined, as an example, the maximum thickness average value of the Fe₂AlSi₂ phase may be 10.0 µm or less.

According to an example embodiment of the present disclosure, the Fe₂AlSi₂ phase may have a maximum value of spacing between the adjacent Fe₂AlSi₂ phases may be 4.5 µm or less, when viewed from the cross section of the alloying plating layer. Herein, the maximum value of spacing between the adjacent Fe₂AlSi₂ phases refers to a largest value among the minimum values obtained after measuring minimum values in a straight line distance therebetween for each adjacent Fe₂AlSi₂ phase present in the observation area. As such, an example embodiment of the present disclosure may prevent the problem of hydrogen passing between the adjacent Fe₂AlSi₂ phase by controlling the maximum value in the spacing between the adjacent Fe₂AlSi₂ phase**.** It may be more preferably 4.3 um or less.

Meanwhile, as a non-limiting example, the alloy plating layer may include, by weight: 1.0 to 15% of Si and 0.00100 to 1.00 wt% of Ni, with a balance of Al and unavoidable impurities, when a remaining alloy composition excluding the content of Fe diffused from the base steel sheet is 100%.

Accordingly, the Fe₂AlSi₂ phase may include, by weight: 25.0 to 60.0% of Fe, 10.0 to 20.0% of Si, and 0.300% to 5.00% of Nimax, with the remainder of Al and unavoidable impurities. As such, the hot formed member including the Fe₂AlSi₂ phase in the alloy plating layer may improve hydrogen embrittlement of a steel material by decreasing the diffusible hydrogen amount after the HPF heat treatment, as described above. More specifically, according to a non-limiting example, the diffusible hydrogen amount of the alloy plating layer may be 0.2 ppm or less, and the hydrogen diffusion coefficient D_{eff,coating} value may be 2.5×10⁻⁷ cm²s⁻¹ or less. Herein, the hydrogen diffusion coefficient D_{eff,coating} value of the alloy plating layer may be derived from the following Equations 2 and 3:
${D}_{eff} = 0.76 ⋅ \frac{{L}^{2}}{{π}^{2} {t}_{b}}$ (Equation 2)
wherein D_{eff} is a hydrogen diffusion coefficient of the hot formed member, L is a thickness of the hot formed member, and t_{b} is a start time (sec) when hydrogen begins to permeate during a hydrogen permeability test in the hot formed member,
$\frac{L}{{D}_{eff}} = \frac{{L}_{sheet}}{{D}_{eff , sheet}} + \frac{{L}_{coating}}{{D}_{eff , coating}}$ (Equation 3)
wherein D_{eff} is a hydrogen diffusion coefficient of the hot formed member, L is a thickness of the hot formed member, Lₛₕₑₑₜ is a thickness of the base iron, L_{Coating} is a thickness of the alloy plating layer, and D_{eff,sheet} is a hydrogen diffusion coefficient of the base iron.

The hydrogen diffusion coefficient D_{eff} may be measured by a hydrogen permeability test. Specifically, the thickness and the hydrogen permeability may be measured for the hot formed member including the alloy plating layer, and the base iron from which the alloy plating layer has been removed by surface polishing and the like. Then, the measured values are applied to the above equations, thereby calculating the hydrogen diffusion coefficient D_{eff,coating} of the alloy plating layer.

As such, hot formed member according to the present disclosure may delay hydrogen diffusion in the alloy plating layer after the HPF heat treatment, and thus, secure excellent resistance to hydrogen embrittlement. Therefore, the hot formed member of the present disclosure may prevent fracture of a steel sheet due to hydrogen embrittlement after the hot press forming.

Hereinafter, the present disclosure will be specifically described through the following Examples. However, it should be noted that the following Examples are only for describing the present disclosure in detail by illustration, and are not intended to limit the right scope of the present disclosure. The reason is that the right scope of the present disclosure is determined by the matters described in the claims and reasonably inferred therefrom. Mode for Invention

### (Examples)

First, a 22MnB5 steel sheet having the composition range of Table 1 was prepared and cold rolled. Thereafter, Ni flash electroplating was performed on the corresponding cold rolled steel sheet at a plating deposited amount of 300 mg/m². Next, continuous annealing at a target temperature of 750°C to 820°C was performed. Thereafter, the steel sheet was dipped into an aluminum plating bath including 9.5 wt% of Si and the remainder of Al and unavoidable impurities, and in the corresponding process, the plating deposited amount was adjusted using an air knife in the conditions of Table 2. Next, the steel sheet was cooled to obtain a plated steel sheet. The average thickness of the Fe₂Al₈Si phase of the obtained plated steel sheet for hot forming was measured, and is shown together in the following Table 2. At this time, the average thickness of the Fe₂Al₈Si phase was derived by observing a specimen through SEM photography, measuring a thickness at 10 points at intervals of 1 µm in a perpendicular direction of the thickness, and then calculating an average value thereof.

**[Table 1]**

| Alloy composition (wt%) | C | Mn | Si | P | S | Al | N | Cr | B |
|---|---|---|---|---|---|---|---|---|---|
| 22MnB5 | 0.22 | 1.25 | 0.25 | 0.010 | 0.0030 | 0.030 | 0.006 | 0.20 | 0.0025 |

**[Table 2]**

| Classification | Line speed (mpm) | Air knife (A/K) | | | K value | Fe₂Al₈Si phase |
|---|---|---|---|---|---|---|
| | | A/K spacing (mm) | A/K pressure (kPa) | A/K height (mm) | | Thickness (µm) |
| Inventive Example 1 | 75 | 8 | 13 | 900 | 2.29 | 7.8 |
| Inventive Example 2 | 75 | 7 | 14 | 800 | 3.17 | 5.1 |
| Comparative Example 1 | 75 | 6.5 | 15 | 700 | 4.18 | 2.6 |
| Inventive Example 3 | 90 | 7.5 | 12 | 800 | 2.11 | 8.6 |
| Inventive Example 4 | 90 | 6.5 | 14 | 600 | 3.79 | 3.6 |
| Comparative Example 2 | 90 | 6 | 15 | 600 | 4.40 | 1.9 |
| Inventive Example 5 | 100 | 8 | 12 | 700 | 2.04 | 8.7 |
| Inventive Example 6 | 100 | 6.5 | 13 | 700 | 2.71 | 5.9 |
| Inventive Example 7 | 100 | 6 | 15 | 600 | 3.96 | 3.2 |
| Comparative Example 3 | 100 | 5.5 | 15 | 600 | 4.32 | 2.0 |
| Inventive Example 8 | 115 | 6.5 | 11 | 600 | 2.33 | 8.2 |
| Inventive Example 9 | 115 | 6 | 14 | 700 | 2.75 | 5.5 |
| Inventive Example 10 | 115 | 5.5 | 13 | 600 | 3.25 | 4.3 |
| Comparative Example 4 | 115 | 5 | 15 | 600 | 4.13 | 2.4 |

Thereafter, the manufactured plated steel sheet for hot forming was heated at a temperature of 900°C for 6 minutes, and then the heated steel sheet was hot formed into a desired shape using a press to manufacture a hot formed member. The composition of the alloy plating layer of the manufactured hot formed member was calculated by a GDS profile, and as a result, included by weight: 9.0% of Si and 0.17% of Ni, with the remainder of Al and other unavoidable impurities, when a remaining alloy composition excluding the content of Fe diffused from the base steel sheet was 100%. Thereafter, the area fraction of the Fe₂AlSi₂ phase to the total area fraction of the alloy plating layer, the maximum thickness average value of the Fe₂AlSi₂ phase, the maximum value of the spacing between adjacent phases, D_{eff,coating} , and the diffusible hydrogen amount, of the manufactured hot formed member were measured and are shown in the following Table 3.

More specifically, the area fraction of the Fe₂AlSi₂ phase in the alloy plating layer was measured by distinguishing the Fe₂AlSi₂ phase through SEM observation and performing SEM image analysis. At this time, the magnification was 1000 times. In addition, the maximum thickness average value of the Fe₂AlSi₂ phase and the maximum value of the spacing of adjacent phases were also measured for the Fe₂AlSi₂ phase observed through SEM observation. The maximum thickness of the Fe₂AlSi₂ phase and the spacing maximum value between the adjacent phases were measured 5 times, respectively, and they were averaged and are shown in the following Table 3.

Then, a hydrogen permeability test of the manufactured hot formed members was performed to measure a start time (t_{b}) at which hydrogen began to permeate, and the thickness (L) of the hot formed member was measured and substituted into Equation 2 to calculate D_{eff}. Next, the base iron obtained by removing the alloy plating layer from the hot formed member through surface polishing and the like was subjected to the same procedure as the hot formed member to measure the D_{eff,sheet} value and the Lₛₕₑₑₜ value. As such, the measured values were substituted into the following Equation 3 to calculate the D_{eff,coating} value, which is shown in the following Table 3:
${D}_{eff} = 0.76 ⋅ \frac{{L}^{2}}{{π}^{2} {t}_{b}}$ (Equation 2)
wherein D_{eff} is a hydrogen diffusion coefficient of the entire specimen including the alloy plating layer, L is a thickness of the entire specimen, and t_{b} is a start time (sec) when hydrogen begins to permeate during the hydrogen permeability test,
$\frac{L}{{D}_{eff}} = \frac{{L}_{sheet}}{{D}_{eff , sheet}} + \frac{{L}_{coating}}{{D}_{eff , coating}}$ (Equation 3)
wherein D_{eff} is a hydrogen diffusion coefficient of the entire specimen including the alloy plating layer, L is a thickness of the entire specimen, Lₛₕₑₑₜ is a thickness of the base iron, L_{Coating} is a thickness of the alloy plating layer, and D_{eff,sheet} is a hydrogen diffusion coefficient of the base iron.

Finally, the manufactured hot formed member was dipped into a liquid nitrogen within 12 hours and then heated to a target temperature of 300°C at a rate of +5°C/min, the temperature was maintained for 30 minutes, and TDA analysis was performed, thereby detecting a diffusible hydrogen amount. At this time, the TDA analysis was performed using equipment available from Bruker.

**[Table 3]**

| Classification | Fe₂AlSi₂ phase | | | Deff,coating (×10⁻⁷ cm²s⁻¹) | Diffusible hydrogen amount (ppm) |
|---|---|---|---|---|---|
| | Area fraction (% by area) | Maximum thickness average (µm) | Maximum value of spacing between adjacent phases (µm) | | |
| Inventive Example 1 | 10.8 | 6.3 | 0 | 2.01 | 0.09 |
| Inventive Example 2 | 7.3 | 4.1 | 3.1 | 2.38 | 0.17 |
| Comparative Example 1 | 3.1 | 1.9 | 7.1 | 2.65 | 0.30 |
| Inventive Example 3 | 11.1 | 6.4 | 0 | 1.77 | 0.08 |
| Inventive Example 4 | 5.9 | 3.3 | 3.7 | 2.31 | 0.16 |
| Comparative Example 2 | 1.5 | 1.0 | 8.7 | 2.78 | 0.35 |
| Inventive Example 5 | 11.3 | 6.9 | 0 | 1.58 | 0.11 |
| Inventive Example 6 | 8.6 | 5.0 | 2.6 | 2.13 | 0.15 |
| Inventive Example 7 | 5.1 | 2.7 | 4.3 | 2.48 | 0.19 |
| Comparative Example 3 | 0.9 | 0.4 | 10.9 | 2.80 | 0.31 |
| Inventive Example 8 | 10.5 | 6.2 | 0 | 1.90 | 0.14 |
| Inventive Example 9 | 8.7 | 4.9 | 2.4 | 2.05 | 0.16 |
| Inventive Example 10 | 7.0 | 4.0 | 3.3 | 2.41 | 0.18 |
| Comparative Example 4 | 2.6 | 1.6 | 7.8 | 2.60 | 0.28 |

In Table 2, since the plated steel sheets for hot forming of Comparative Examples 1 to 4 had the K value exceeding the range suggested in the present disclosure, the K value being derived from Equation 1 suggested in the present disclosure, the Al-based plating layer was excessively cooled, and thus, the Fe₂Al₈Si phase including Ni was not sufficiently diffused.

In addition, in Table 3, it was confirmed that the hot formed members of Comparative Examples 1 to 4 in which the Fe₂Al₈Si phase was not sufficiently diffused as described above was not produced well on the intermediate layer. Accordingly, the Fe₂AlSi₂ phase does not act as a barrier of diffusible hydrogen of the alloy plating layer effectively, the hydrogen diffusion coefficient exceeded 2.5×10⁻⁷ cm²s⁻¹, and also after the heat treatment, the diffusible hydrogen amount exceeded 0.2 ppm to cause hydrogen embrittlement.

However, it was confirmed that Inventive Examples 1 to 3 which all satisfied the conditions suggested in the present disclosure secured excellent resistance to hydrogen embrittlement.

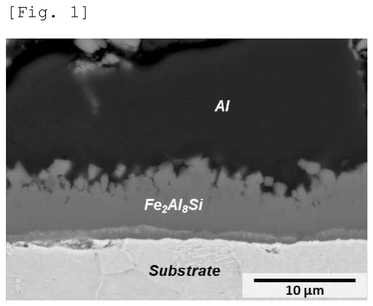

FIG. 1 is an SEM photographic image of a plating layer formed on a plated steel sheet for hot forming corresponding to Inventive Example 6, in which the composition ratio of the Fe₂Al₈Si phase formed in the plating layer formed on the plated steel sheet for hot forming was, by weight: 19% of Fe, 11% of Si, and 0.42% of Nimax.

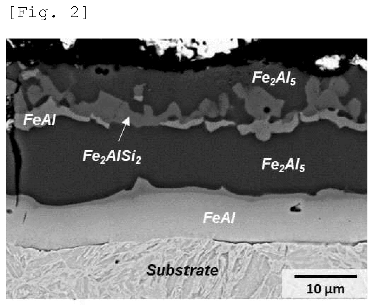

FIG. 2 is an SEM photographic image of a plating layer formed on a hot formed member corresponding to Inventive Example 6. At this time, the composition ratio of the Fe₂AlSi₂ phase formed in the plating layer formed on the hot formed member was, by weight: 45.97% of Fe, 13.33% of Si, and 0.34% of Nimax.

## Claims

1. A plated steel sheet for hot forming, comprising:
a base steel sheet; and
an Al-based plating layer formed on a surface of the base steel sheet,
wherein the Al-based plating layer includes a Fe₂Al₈Si phase,
the Fe₂Al₈Si phase includes, by weight: 15.0 to 25.0% of Fe, 5.00 to 15.0% of Si, and 0.400% to 5.00% of Nimax, and
the Fe₂Al₈Si phase has an average thickness of 3.0 µm or more in a thickness direction of the Al-based plating layer and includes a remainder of Al and unavoidable impurities.

2. The plated steel sheet for hot forming of claim 1, wherein the Al-based plating layer includes, by weight, 5.0 to 10% of Si with the remainder of Al and other unavoidable impurities, when a remaining alloy composition excluding Fe diffused from the base steel sheet is 100%.

3. The plated steel sheet for hot forming of claim 1, wherein the base steel sheet includes, by weight: 0.060 to 0.50% of C, 0.050 to 1.0% of Si, 0.50 to 4.0% of Mn, 0.00100 to 0.0300% of P, 0.000100 to 0.0200% of S, 0.0100 to 0.100% of Al, 0.0100 to 1.00% of Cr, 0.001000 to 0.02000% of N, 0 to 0.100% of Ti, 0 to 0.01000% of B, 0 to 1.00% of Cu, 0 to 1.00% of Mo, 0 to 1.00% of Cr, 0 to 1.00% of Ni, 0 to 1.00% of V, 0 to 0.0100% of Ca, 0 to 0.100% of Nb, 0 to 1.00% of Sn, 0 to 1.00% of W, 0 to 1.00% of Sb, 0 to 0.100% of Mg, 0 to 1.00% of Co, 0 to 1.00% of As, 0 to 1.00% of Zr, 0 to 1.00% of Bi, and 0 to 0.300% of REM, with a remainder of Fe and unavoidable impurities.

4. The plated steel sheet for hot forming of claim 1, further comprising a Ni flash electroplating layer between the base steel sheet and the Al-based plating layer.

5. A method for manufacturing a plated steel sheet for hot forming, the method comprising:
preparing a base steel sheet;
performing Ni flash electroplating on the base steel sheet to obtain an electroplated steel sheet;
continuously annealing the electroplated steel sheet;
dipping the continuously annealed electroplated steel sheet into an aluminum plating bath;
adjusting a plating deposited amount of the electroplated steel sheet dipped into the aluminum plating bath with an air knife (A/K); and
cooling the electroplated steel sheet to obtain a plated steel sheet,
wherein a K value derived by the following Equation 1 is 2 or more and 4 or less: $K = {10}^{4} \times \left(a\times d\right) / \left(b\times c\times e\right)$ (Equation 1)
wherein a is a Si content (wt%) in the aluminum plating bath, b is a line speed (mpm), c is air knife spacing (mm), d is air knife pressure (kPa), and e is an air knife height (mm).

6. The method for manufacturing a plated steel sheet for hot forming of claim 5, wherein the Ni flash electroplating is performed in the plating deposited amount of 150 mg/m² or more and 2500mg/m² or less.

7. The method for manufacturing a plated steel sheet for hot forming of claim 5, wherein the base steel sheet includes, by weight: 0.060 to 0.50% of C, 0.050 to 1.0% of Si, 0.50 to 4.0% of Mn, 0.00100 to 0.0300% of P, 0.000100 to 0.0200% of S, 0.0100 to 0.100% of Al, 0.0100 to 1.00% of Cr, 0.001000 to 0.02000% of N, 0 to 0.100% of Ti, 0 to 0.01000% of B, 0 to 1.00% of Cu, 0 to 1.00% of Mo, 0 to 1.00% of Cr, 0 to 1.00% of Ni, 0 to 1.00% of V, 0 to 0.01% of Ca, 0 to 0.10% of Nb, 0 to 1.00% of Sn, 0 to 1.00% of W, 0 to 1.00% of Sb, 0 to 0.100% of Mg, 0 to 1.00% of Co, 0 to 1.00% of As, 0 to 1.00% of Zr, 0 to 1.00% of Bi, and 0 to 0.300% of REM, with a remainder of Fe and unavoidable impurities.

8. The method for manufacturing a plated steel sheet for hot forming of claim 5, wherein the aluminum plating bath includes 5.0 to 10 wt% of Si, with a remainder of Al and other unavoidable impurities.

9. A hot formed member comprising:
base iron; and
an alloy plating layer formed on the base iron,
wherein the alloy plating layer includes a Fe₂AlSi₂ phase,
the Fe₂AlSi₂ phase includes, by weight: 25.0 to 60.0% of Fe, 10.0 to 20.0% of Si, and 0.300% to 5.00% of Nimax, with a remainder of Al and unavoidable impurities, and
the Fe₂AlSi₂ phase is 5% by area or more with respect to a total area of the alloy plating layer.

10. The hot formed member of claim 9, wherein the alloy plating layer includes, by weight: 1.0 to 15% of Si and 0.00100 to 1.00% of Ni, with the remainder of Al and other unavoidable impurities, when a remaining alloy composition excluding a content of Fe diffused from the base steel sheet is 100%.

11. The hot formed member of claim 9, wherein the Fe₂AlSi₂ phase is formed as a distinct layer in the middle of the alloy plating layer.

12. The hot formed member of claim 9, wherein a maximum thickness average value of the Fe₂AlSi₂ phase is 2.0 µm or more in a thickness direction of the alloy plating layer.

13. The hot formed member of claim 9, wherein the Fe₂AlSi₂ phase has a maximum value of spacing with an adjacent Fe₂AlSi₂ phase of 4.5 µm or less, when observed from a cross section of the alloy plating layer.

14. The hot formed member of claim 9, wherein a hydrogen diffusion coefficient D_{eff,coating} value of the alloy plating layer derived from the following Equations 2 and 3 is 2.5×10⁻⁷ cm²s⁻¹ or less: ${D}_{eff} = 0.76 ⋅ \frac{{L}^{2}}{{π}^{2} {t}_{b}}$ (Equation 2) wherein D_{eff} is a hydrogen diffusion coefficient of the hot formed member, L is a thickness of the hot formed member, and t_{b} is a start time (sec) when hydrogen begins to permeate during a hydrogen permeability test in the hot formed member, $\frac{L}{{D}_{eff}} = \frac{{L}_{sheet}}{{D}_{eff , sheet}} + \frac{{L}_{coating}}{{D}_{eff , coating}}$ (Equation 3) wherein D_{eff} is a hydrogen diffusion coefficient of the hot formed member, L is a thickness of the hot formed member, Lₛₕₑₑₜ is a thickness of the base iron, L_{Coating} is a thickness of the alloy plating layer, and D_{eff,sheet} is a hydrogen diffusion coefficient of the base iron.

15. The hot formed member of claim 9, wherein a diffusible hydrogen amount is 0.2 ppm or less.
